# DEMANDE DE BREVET EUROPEEN

(11) **EP 2 248 613 A1**
(43) Date de publication de la demande: **10.11.2010**
(21) Numéro de dépôt: 10290222.8
(22) Date de dépôt: 28.04.2010
(51) Int. Cl.: B21D 11/07, F24J 2/24

(54) **Procédé et dispositif de fabrication d'un serpentin**

(30) Priorité: 29.04.2009 FR 0902085
(71) Demandeur: Dabrigeon, Mark, 43370 Solignac sur Loire (FR)
(72) Inventeur: Dabrigeon, Marc, 43370 Solignac sur Loire (FR); Deberle, Alain, 30470 Aimargues (FR); Vernhes, Loïc, 31140 Saint Loup Cammas (FR); Pons, Christian, 91190 Villiers le Bac (FR)
(74) Mandataire: Célanie, Christian

(57) **Abrégé**

L'invention concerne un procédé et un dispositif de fabrication d'un serpentin surfacique de longueur, pas, largeur quelconque.

Le dispositif comprend :
- deux matrices de cintrage (11, 12) du tube (1) disposées à distance variable l'une de l'autre et solidaires du bâti pour imprimer au tube des courbures successives (4, 6), lesdites matrices étant escamotables,
- une réserve (15) dans laquelle le tube (1) est stocké suivant une longueur et un diamètre quelconque,
- un support (16) relié au bâti (9) et mobile par rapport à celui-ci pour entraîner la noix de cintrage (22) et positionner le tube (1) successivement au voisinage de chacune des matrices (11, 12) afin de réaliser une spire du serpentin,
- des moyens pour escamoter les matrices (11, 12), et
- des moyens (8a, 8b) pour déplacer successivement les spires en dehors des matrices (11, 12).

Application à la fabrication de serpentin surfacique pour panneaux solaires et autre.

## Description

Le secteur technique de la présente invention est celui des dispositifs de réalisation d'un serpentin surfacique à partir d'un tube.

Les serpentins sont constitués d'une multitude de spires d'un tube et sont généralement utilisés pour faire circuler un fluide en maximisant la longueur pour une surface d'application donnée. C'est le cas par exemple des panneaux solaires dans lesquels l'eau est chauffée par le soleil. C'est aussi le cas des installations de chauffage par le sol.

Pour réaliser un serpentin surfacique, on connaît un dispositif manuel mis en oeuvre par un personnel adapté et nécessitant une dextérité et un savoir-faire spécifiques. Pour cintrer un tube, on utilise généralement une matrice de cintrage que ce personnel manoeuvre manuellement à la force du poignet afin de réaliser des courbures successives du tube.

Cette façon de faire présente de nombreux inconvénients. Tout d'abord, le personnel doit manipuler des charges importantes qui affectent la régularité du serpentin. La longueur du serpentin rend complexe la manipulation du serpentin qui est rapidement détérioré en cas de fausse manoeuvre. Enfin, la longueur du serpentin fabriqué est toujours limitée.

Un autre procédé de réalisation d'un serpentin consiste à fabriquer des spires individuelles puis de les souder ensemble. On comprend que ce genre de réalisation rende onéreux la fabrication d'un serpentin et de plus la qualité des soudures doit être fiable.

Le but de la présente invention est de fournir un procédé et un dispositif permettant la réalisation d'un serpentin surfacique de longueur, pas, largeur quelconque sans intervention manuelle.

L'invention a donc pour objet un procédé de fabrication d'un serpentin de longueur quelconque à partir d'un tube métallique, **caractérisé en ce qu**'il comprend les étapes suivantes :
- positionnement du tube à partir d'une réserve dans une première matrice de cintrage,
- entraînement de la réserve afin d'enrouler le tube autour d'une première matrice pour le cintrer en lui imprimant une première courbure du tube,
- positionnement du tube dans une seconde matrice,
- entraînement en sens inverse de la réserve afin d'enrouler le tube autour de la seconde matrice pour le cintrer en lui imprimant une seconde courbure de sens inverse à la première courbure pour obtenir une première spire du serpentin,
- libération de la spire par les matrices et translation de cette spire pour réaliser les spires suivantes.

Avantageusement, la réserve est mobile en rotation, puis en translation.

L'invention concerne également un dispositif de fabrication d'un serpentin de longueur, pas, largeur quelconque du type comprenant un bâti, **caractérisé en ce qu**'il comprend :
- deux matrices de cintrage du tube disposées à une distance réglable l'une de l'autre et solidaires du bâti pour imprimer au tube des courbures successives, lesdites matrices étant escamotables,
- une réserve dans laquelle le tube est stocké suivant une longueur quelconque,
- un support relié au bâti et mobile par rapport à celui-ci pour entraîner le tube et l'amener successivement au voisinage de chacune des matrices afin de réaliser une spire du serpentin, et
- des moyens pour déplacer successivement les spires en dehors des matrices.

Selon une caractéristique avantageuse de l'invention, chaque matrice est reliée à un moyen d'escamotage solidaire du bâti afin d'amener chacune d'elle au niveau du tube.

Selon une autre caractéristique avantageuse de l'invention, le moyen d'escamotage est un vérin.

Selon encore une autre caractéristique avantageuse de l'invention, la réserve est solidaire du support mobile.

Selon encore une autre caractéristique avantageuse de l'invention, le support est mobile en rotation puis en translation par rapport au bâti.

Selon encore une autre caractéristique avantageuse de l'invention, la réserve est une bobine sur laquelle le tube est enroulé, des moyens étant prévus sur le support pour redresser le tube.

Selon encore une autre caractéristique avantageuse de l'invention, les moyens pour détordre le tube sont constitués par un ensemble de poulies disposées en ligne droite.

Selon encore une autre caractéristique avantageuse de l'invention, le dispositif comporte une noix de cintrage coopérant avec chaque matrice, le tube étant maintenu en appui dans la matrice par ladite noix.

Selon encore une autre caractéristique avantageuse de l'invention, la noix de cintrage est solidaire d'un arbre entraîné en rotation par le chariot pour imprimer la courbure du tube.

Selon encore une autre caractéristique avantageuse de l'invention, le déplacement de la noix de cintrage est synchronisé mécaniquement ou autrement avec celui du support

L'invention vise enfin l'application du serpentin obtenu à la réalisation d'un panneau solaire ou d'un moyen de chauffage par le sol ou autre.

Un tout premier avantage de la présente invention réside dans le fait que la réalisation d'un serpentin peut être entièrement automatisée.

Un autre avantage réside dans l'obtention d'un serpentin de longueur, pas, largeur quelconque.

Un autre avantage encore de l'invention réside dans la réalisation de serpentin à partir de tube de diamètre quelconque.

Un autre avantage encore de l'invention réside dans la réalisation d'un serpentin présentant des courbures franches sans déformations.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente un serpentin obtenu selon la présente invention,
- la figure 2 représente une vue du dispositif selon l'invention avec le support dans la première position pour entamer la première courbure,
- la figure 3 représente une vue du dispositif selon l'invention avec le support en position intermédiaire,
- la figure 4 représente une vue du dispositif selon l'invention avec le support dans la seconde position pour entamer la seconde courbure,
- la figure 5 est une vue montrant la matrice et la noix de cintrage en position neutre initiale,
- la figure 6 est une vue montrant la matrice et la noix de cintrage en position active,
- la figure 7 est une vue montrant la matrice et la noix de cintrage en position active finale, et
- la figure 8 montre un détail de réalisation.

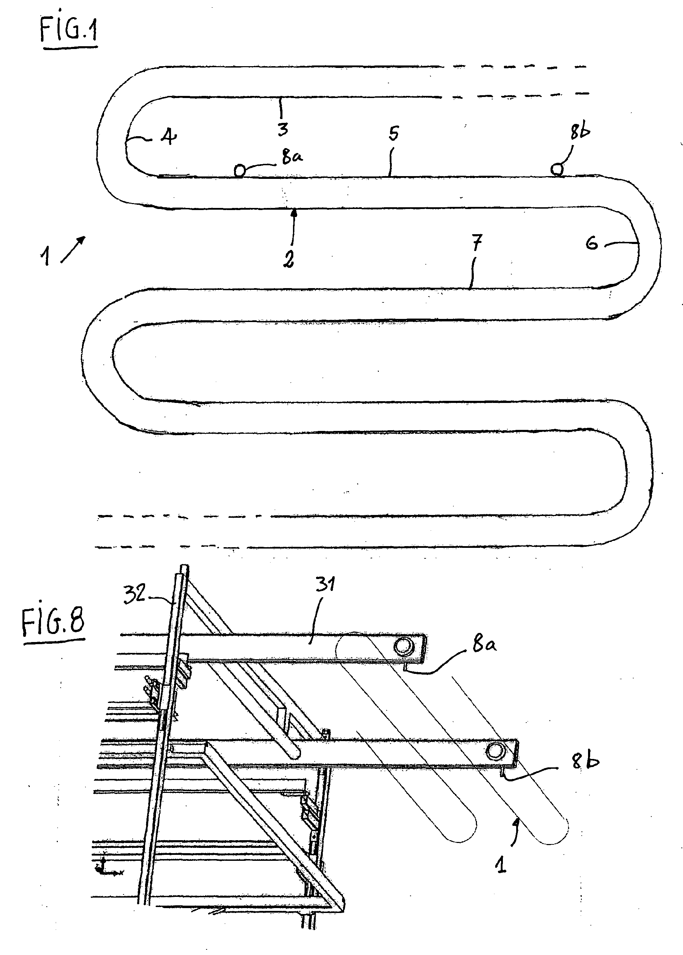

Un serpentin est constitué d'une succession de spires de dimensions variées suivant des longueurs, pas, largeur et des diamètres quelconques. L'invention comme expliqué ci-dessus permet de réaliser des serpentins en une succession de spires selon les besoins de l'utilisateur en fonction de la longueur totale du serpentin et de la largueur nécessaire. Sur la figure 1, on a représenté un serpentin 1 comprenant deux spires, une spire 2 comprenant une demi-branche 3 suivie d'une première courbure 4 puis d'une branche 5 prolongée par une seconde courbure 6 suivie d'une demi-branche 7. Bien entendu, le serpentin est réalisé en continu sans soudure des spires. Le serpentin repose sur un plateau d'un bâti comme cela sera expliqué ci-après et au cours de la fabrication du serpentin des doigts d'entraînement 8a et 8b viennent en prise par exemple sur la première spire de manière à assurer sa translation. Le tube utilisé ici est un tube en cuivre de 16 mm de diamètre environ.

Le tube peut être constitué de n'importe quel matériau, stocké en bobine, pouvant se former à froid, sans limite de poids.

Pour des raisons de commodité, le serpentin 1 n'est pas représenté sur les figures suivantes. Il va s'en dire que le tube est positionné sur les éléments permettant sa fabrication.

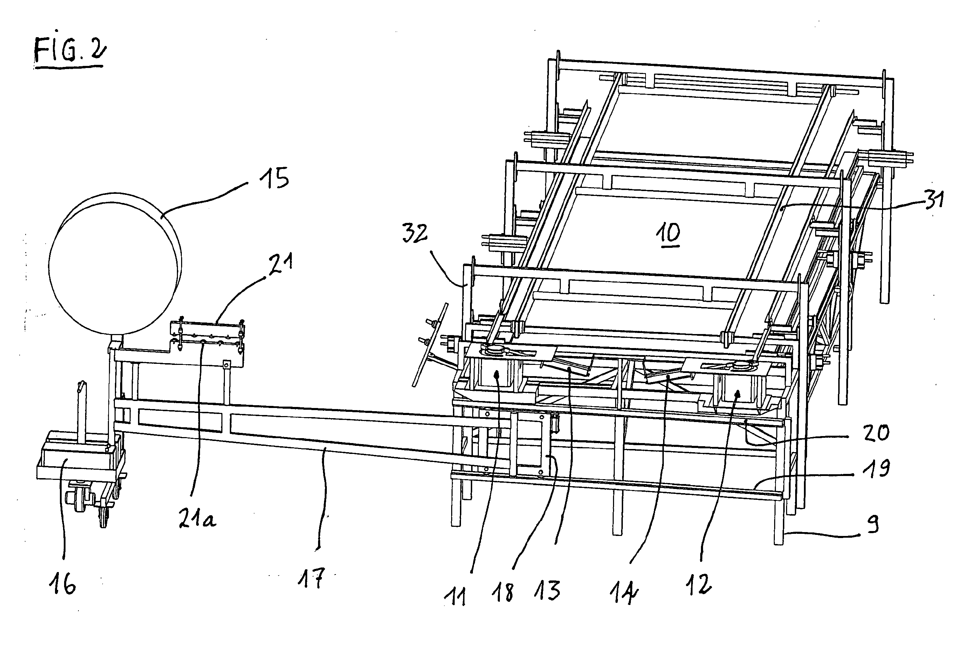

Sur la figure 2, on a représenté un bâti 9 reposant sur le sol et définissant une surface 10 sur laquelle circule le serpentin au cours de sa fabrication. La longueur et la largeur de cette surface 10 sont bien entendu adaptées aux dimensions du serpentin à fabriquer. Ce bâti 9 supporte une première matrice 11 et une seconde matrice 12 escamotables à l'aide des moyens respectifs 13 et 14. La réserve 15 de tube est solidaire d'un support 16 relié au bâti par un cadre 17 dont un côté 18 est monté mobile en rotation et en translation entre deux guides 19 et 20 espacés fixés au bâti 9. Le côté 18 constitue donc une liaison pivot mobile entre des butées fixées aux guides 19 et 20. Sur cette figure, on voit que le support 16 est en position extrême contre des butées au niveau de la matrice 11. Le support 16 est monté sur des roues entraînées par une motorisation.

Un dispositif de redressage 21 est monté sur le cadre 17 au voisinage de la sortie du tube enroulé sur la réserve 15 qui ici est une bobine. Ce dispositif est constitué de deux ensembles de poulies 21a disposées en vis-à-vis, chaque ensemble étant aligné suivant une droite pour définir un passage dans lequel le tube est amené à circuler. La compression du tube entre les deux ensembles permet de redresser le tube.

Le dispositif ainsi réalisé présente une certaine compacité avec l'aire d'évolution du support 16. Selon une variante de l'invention, la réserve 15 pourrait être mécaniquement indépendante du chariot 18.

Le positionnement initial du tube est réalisé par exemple manuellement en introduisant son extrémité libre dans le dispositif de redressage 21, puis en l'amenant au niveau de la matrice 11 suivant une longueur déterminée pour constituer la première demi-branche 3 évoquée en relation avec la figure 1 comme cela sera expliqué ci-après.

La figure 2 montre de plus un cadre mobile 31 fixé à des potences 32 pour assurer le déplacement du serpentin par rapport aux matrices 11 et 12 au fur et à mesure de sa fabrication.

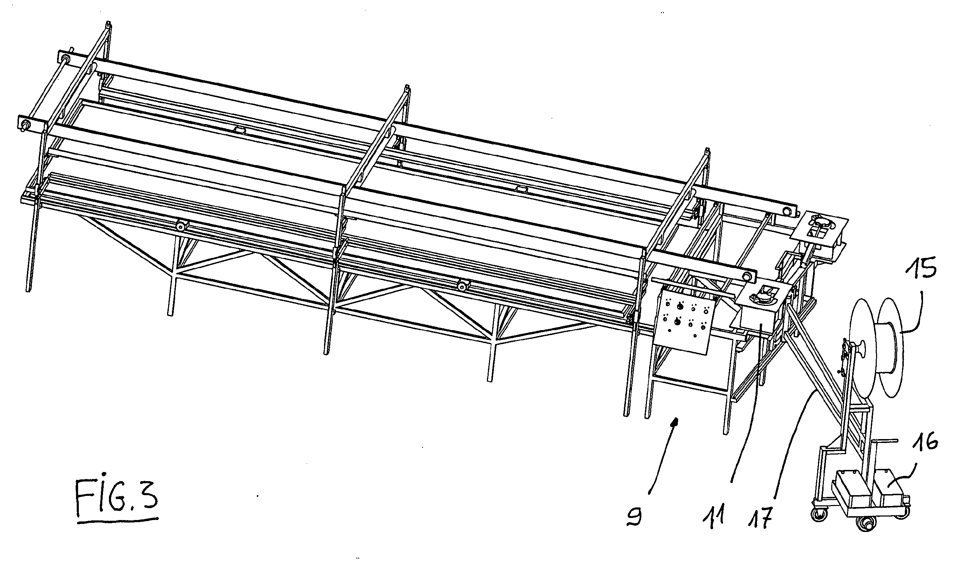

Sur la figure 3, on a représenté une position intermédiaire du support 16 où on a commandé sa rotation en entraînant la réserve 15 et le tube non représenté. On comprend que cette rotation du support 16 provoque l'enroulement du tube autour de la matrice 11 de façon à réaliser la première courbure 4 et commencer la réalisation de la branche 5 évoquée en relation avec la figure 1.

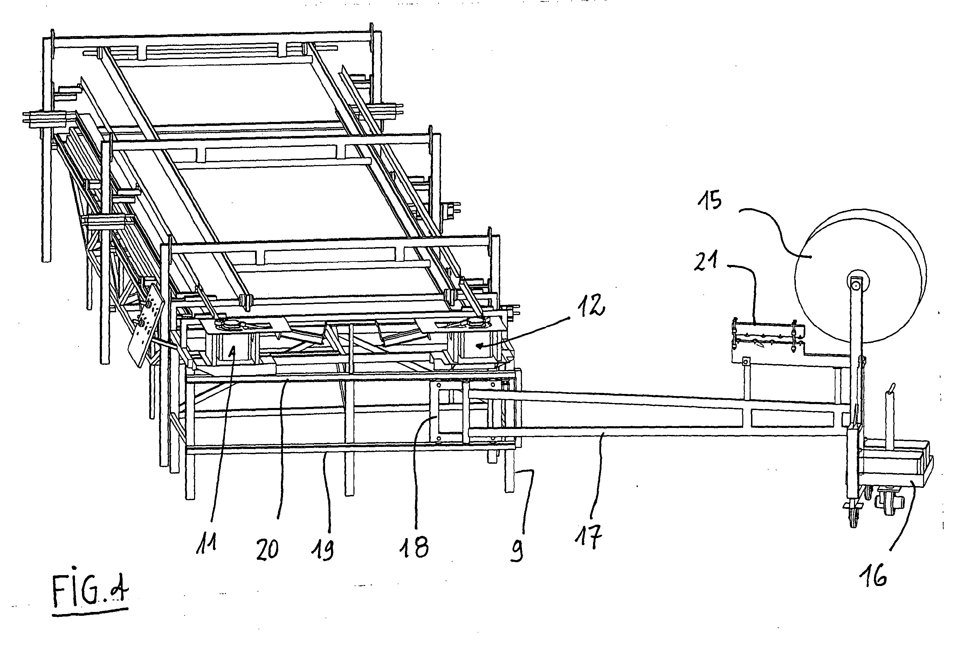

Sur la figure 4, on a représenté le dispositif selon l'invention où le support 16 est conduit par sa motorisation au niveau de la seconde matrice 12 après une rotation d'environ 180° par rapport au bâti 9. Dans cette position la branche 5 est réalisée. On voit que le côté 18 du cadre 17 est en contact avec les butées prévues au niveau de la seconde matrice 12 après rotation et translation par rapport aux guides 19 et 20. Il va de soi que la translation du support 16 ne peut s'effectuer qu'après sa rotation complète. Cette phase constitue un demi-cycle de réalisation de la spire.

On comprend que dans cette position, le tube a été amené au niveau de la matrice 12 afin de réaliser la seconde courbure 6. Les courbures successives sont bien entendu de sens opposé et on s'arrange pour que le tube soit positionné correctement sur chacune des matrices. Après la mise en place de la matrice 12 contre le tube on commande le retour en position initiale du support 6 comme cela est représenté sur la figure 2 pour effectuer l'autre demi-cycle pour réaliser la spire complète. La première spire ainsi réalisée est déplacée à l'aide des doigts 8a et 8b.

Pendant toute la phase de réalisation de la seconde courbure du tube, ce tube reste maintenu fixement par la matrice 11 et la noix associée. En d'autres termes, la matrice 11 assure deux fonctions, celle de permettre l'enroulement du tube pour réaliser la première courbure et celle de blocage du tube pendant la réalisation de la seconde courbure.

Il va sans dire qu'en répétant plusieurs fois les phases décrites ci-dessus, on fabrique des serpentins de longueur quelconque.

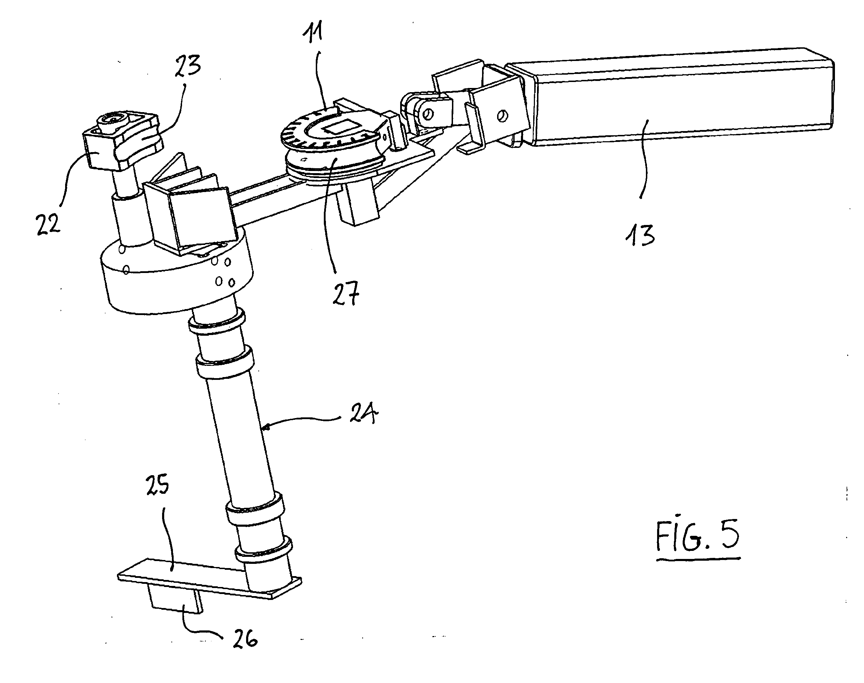

Sur la figure 5, on a représenté un moyen de maintien du tube dont la fonction supplémentaire est de coopérer avec la matrice 11 afin de réguler la forme de la courbure. Ce moyen se présente sous la forme d'une noix 22 munie d'une rainure 23 de réception du tube 1. Cette noix 22 est solidaire d'un vilebrequin 24 reliée au bâti 9 et articulée par rapport à celui-ci. Ce vilebrequin est prolongé par un bras 25 perpendiculaire portant une plaque 26. Cette plaque 26 est attelée au cadre 17 de manière adéquate afin d'entraîner en rotation la noix en synchronisme avec le déplacement du support 16. Sur la figure, on voit encore que la matrice 11 présente une rainure 27 conformée aux dimensions du tube à cintrer. On voit également que la matrice 11 est escamotée à l'aide du vérin 13 afin de dégager l'emplacement du tube sur la noix 22. On s'arrange pour éviter un contact entre le tube et la matrice lors sa mise en place.

Avantageusement, la noix 22 est automatiquement ramener en position initiale par un mécanisme approprié, par exemple un ressort enroulé sur le vilebrequin 24.

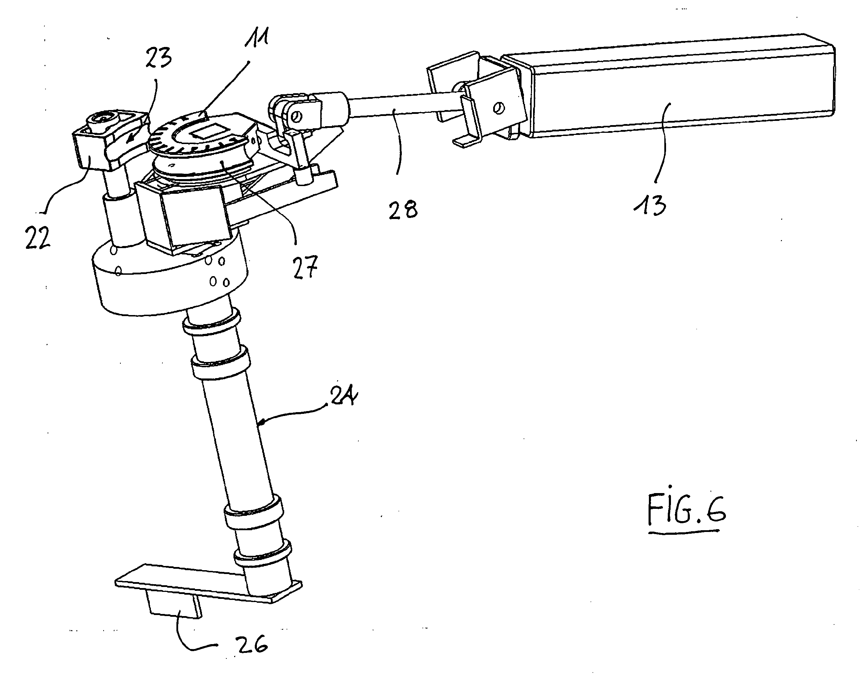

Sur la figure 6, on a représenté la mise en place de la matrice 11 sous l'action du bras 28 du vérin 13. Dans cette position les rainures respectives 23 et 27 de la noix et de la matrice sont disposées en vis-à-vis en emprisonnant le tube (non représenté). Lors de la rotation du cadre 17 par rapport au bâti 9, donc du support 16, la plaque 26 est entraînée pour que la noix 22 parcourt la surface externe du tube et faciliter la réalisation de la courbure. De cette manière, la rotation de la noix 22 est donc synchronisée mécaniquement avec le déplacement en rotation du cadre 7 et donc du support 16 et de la réserve 15. Bien entendu, tout autre moyen de synchronisation pourrait être prévu. En particulier, un automate programmable pourrait commander en synchronisme la rotation de la noix d'une part et du déplacement du cadre sans couplage entre ces éléments, par exemple à l'aide de moteurs électriques.

Ce synchronisme permet de réaliser de manière parfaite le cintrage du tube 1.

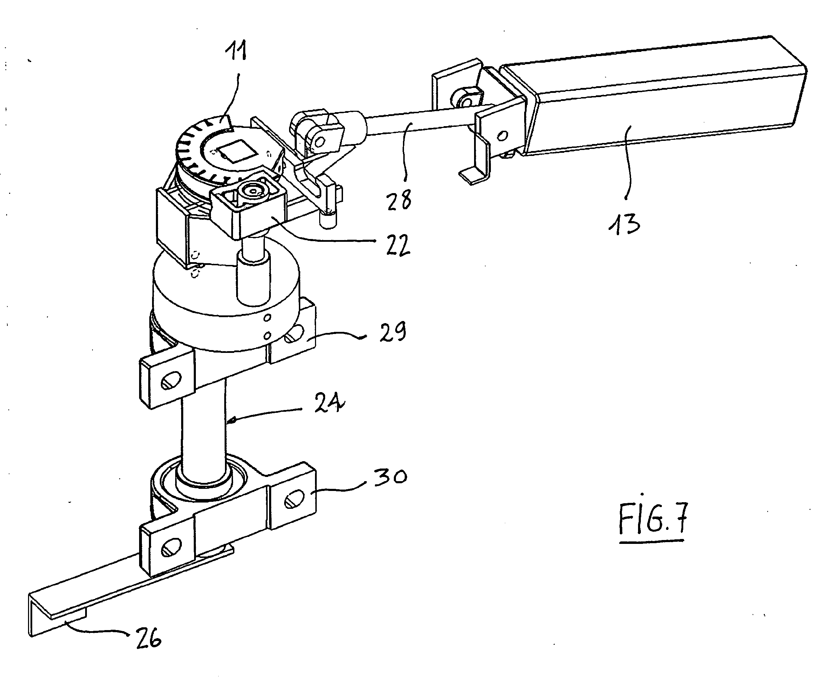

Sur la figure 7, on a représenté la position finale de la noix 22 passant d'une position avant dans le plan de la figure 6 à une position arrière sur la figure 7. La courbure du tube est ainsi conformée. Sur cette figure, on a représenté les brides de fixation 29 et 30 du vilebrequin 24 sur le bâti.

Il va de soi que les moyens décrits en relation avec les figures 5, 6 et 7 sont prévus de manière symétrique au niveau de la seconde matrice 12 pour réaliser la seconde courbure. Bien entendu, lors de la réalisation de la première courbure, la matrice 12 est en position escamotée. Ainsi, lorsque le tube 1 est amené dans la position représentée sur la figure 4, il en appui sur la noix située en arrière de la matrice 12 et on peut alors commander la mise en position de la matrice 12. Puis, on commande ensuite le mouvement du cadre 17 pour qu'il passe de la position représentée à la figure 4 à celle représentée à la figure 2. Au cours de ce déplacement, la noix de cintrage, qui équipe également la matrice 12, est alors entraînée en rotation contre le tube 1 pour réaliser la seconde courbure comme expliqué précédemment. Simultanément, la noix 22 de la matrice 11 est ramenée par le cadre 7 dans sa position initiale de la figure 5. On comprend aisément que la rotation de deux noix au cours des deux demi-cycles sont de sens inverse. Le cycle complet est ainsi terminé et est répété autant de fois que l'on souhaite des spires.

Les figures 5 et 6 montrent un déplacement sensiblement en translation de la matrice 11 de la position escamotée de la figure 5 à la position active de la figure 6. Cette translation s'effectue suivant une direction inclinée par rapport au bâti. Il va de soi que l'on pourrait sans changer le fonctionnement de l'ensemble imprimer un mouvement de translation latérale de la matrice pour la dégager de la courbure du tube puis un mouvement de translation vertical afin de l'amener en dessous du tube pour éviter toute interférence avec celui-ci. Il va de soi que l'on pourrait, sans changer le fonctionnement de l'ensemble, avoir la matrice en deux moitiés, coupé par un plan horizontal, et imprimer un mouvement de translation verticale descendante, à la moitié inférieure, et un mouvement de translation verticale ascendante à la moitié supérieure.

On comprend aisément que la distance entre les deux matrices 11 et 12 peut être quelconque, que la surface 10 du bâti est également quelconque et que les rainures 23 et 27 sont adaptées au profil du tube à cintrer.

Sur la figure 8, on a représenté un détail de réalisation du moyen permettant le déplacement du serpentin. Le cadre mobile 31 est monté mobile sur les potences 31 et est animé d'un mouvement de va-et-vient. Dès la réalisation d'une spire, les doigts 8a et 8b viennent s'accrocher à une spire comme représenté sur la figure 1 et le cadre 31 entraîne le serpentin au delà des matrices 11 et 12. Ainsi, le dispositif peut être actionné pour fabriquer la spire suivante.

Les tubes peuvent être de nature quelconque en particulier en cuivre pour la réalisation de circuit d'eau dans un panneau solaire ou dans un chauffage par le sol. L'invention est particulièrement adaptée pour la réalisation de serpentins utilisés dans ce genre d'application dans lesquelles le tube est un tube de cuivre de diamètre extérieur généralement compris entre 6 et 25 mm.

Les différentes phases de réalisation du serpentin peuvent être totalement automatisées en commandant à partir d'un automate programmable la mobilité du support 16, le positionnement de chaque matrice, la translation des doigts 8, etc, afin de réaliser la longueur voulue du serpentin. C'est donc un aspect tout à fait intéressant de l'invention où on réduit l'intervention du personnel.

## Revendications

1. Procédé de fabrication d'un serpentin de longueur, pas, largeur quelconque à partir d'un tube métallique, **caractérisé en ce qu'**il comprend les étapes suivantes :
- positionnement du tube à partir d'une réserve dans une première matrice de cintrage,
- entraînement de la réserve afin d'enrouler le tube autour de la première matrice pour le cintrer en lui imprimant une première courbure du tube,
- positionnement du tube dans une seconde matrice,
- entraînement en sens inverse de la réserve afin d'enrouler le tube autour de la seconde matrice pour le cintrer en lui imprimant une seconde courbure de sens inverse à la première courbure pour obtenir une première spire du serpentin,
- libération de la spire par les matrices et translation de cette spire pour réaliser les spires suivantes.

2. Procédé de fabrication d'un serpentin selon la revendication 1, **caractérisé en ce que** la réserve est mobile en rotation, puis en translation.

3. Dispositif de fabrication d'un serpentin de longueur, pas, largeur quelconque pour la mise en oeuvre du procédé selon la revendication 1 ou 2 du type comprenant un bâti (9), **caractérisé en ce qu'**il comprend :
- deux matrices de cintrage (11, 12) disposées à distance l'une de l'autre et solidaires du bâti pour imprimer au tube des courbures successives (4, 6), lesdites matrices étant escamotables,
- une réserve (15) dans laquelle le tube (1) est stocké suivant une longueur quelconque,
- un support (16) relié au bâti (9) et mobile par rapport à celui-ci pour entraîner le tube (1) et l'amener successivement au voisinage de chacune des matrices (11, 12) afin de réaliser une spire du serpentin, et
- des moyens (8a, 8b) pour déplacer successivement les spires en dehors des matrices (11, 12).

4. Dispositif de fabrication d'un serpentin de longueur, pas, largeur quelconque selon la revendication 3, **caractérisé en ce que** chaque matrice (11, 12) est reliée à un moyen d'escamotage (13, 14) solidaire du bâti (9) afin d'amener chacune d'elle au niveau du tube.

5. Dispositif de fabrication d'un serpentin de longueur, pas, largeur quelconque selon la revendication 4, **caractérisé en ce que** le moyen d'escamotage (13, 14) est un vérin.

6. Dispositif de fabrication d'un serpentin de longueur, pas, largeur quelconque selon l'une quelconque des revendications 3 à 5, **caractérisé en ce que** la réserve (15) est solidaire du support mobile (16).

7. Dispositif de fabrication d'un serpentin de longueur, pas, largeur quelconque selon la revendication 6, **caractérisé en ce que** le support (16) est mobile en rotation puis en translation par rapport au bâti (9).

8. Dispositif de fabrication d'un serpentin de longueur, pas, largeur quelconque selon l'une quelconque des revendications 3 à 7, **caractérisé en ce que** la réserve (15) est une bobine sur laquelle le tube (1) est enroulé, des moyens (21) étant prévus sur le support (16) pour redresser le tube.

9. Dispositif de fabrication d'un serpentin de longueur, pas, largeur quelconque selon la revendication 8, **caractérisé en ce que** les moyens (21) pour détordre le tube sont constitués par un ensemble de poulies (21a) disposées en ligne droite.

10. Dispositif de fabrication d'un serpentin de longueur, pas, largeur quelconque selon l'une quelconque des revendications 3 à 9, **caractérisé en ce qu'**il comporte une noix de cintrage (22) coopérant avec chaque matrice (11, 12), le tube étant maintenu en appui dans la matrice (11, 12) par ladite noix (22).

11. Dispositif de fabrication d'un serpentin de longueur quelconque selon la revendication 10, **caractérisé en ce que** la noix de cintrage (22) est solidaire d'un arbre (24) entraîné en rotation par le chariot (17) pour parcourir la courbure du tube.

12. Dispositif de fabrication d'un serpentin de longueur quelconque selon la revendication 10 ou 11, **caractérisé en ce que** le déplacement de la noix de cintrage (22) est synchronisé mécaniquement ou autrement avec celui du support (16).

13. Application du serpentin obtenu selon l'une quelconque des revendications 3 à 11 à la réalisation d'un panneau solaire ou d'un moyen de chauffage par le sol.
